# EUROPÄISCHE PATENTANMELDUNG

(11) **EP 1 296 487 A2**
(43) Veröffentlichungstag der Anmeldung: **26.03.2003**
(21) Anmeldenummer: 02102234.8
(22) Anmeldetag: 29.08.2002
(51) Int. Cl.: H04L 12/56, H04Q 11/04

(54) **Verfahren und Kommunikationsanordnung zur Übertragung von Rundsende-Informationen und/oder abrufbaren Informationen in einem Kommunikationsnetz**

(30) Priorität: 03.09.2001 DE 10143105
(71) Anmelder: SIEMENS AKTIENGESELLSCHAFT, 80333 München (DE)
(72) Erfinder: Anders, Jürgen, Dr., 82377 Penzberg (DE); Gemmer, Thomas, 81735 München (DE)

(57) **Zusammenfassung**

Mehrere Verbindungen (vcc1...n) zur Übermittlung von Rundsende-Informationen (tv1...n) sind an eine mehrere Teilnehmeranschlüsse (TA1,2) aufweisende, dezentrale Verteileinrichtung (DSLAM, VERT) herangeführt, wobei mit Hilfe der Verteileinrichtung (DSLAM, VERT) teilnehmeranschlussindividuell zumindest eine der Verbindungen (vcc1...n) auswählbar ist und über die ausgewählte Verbindung (vcc1...n) übermittelte Rundsende-Informationen (tv1...n) an den jeweiligen Teilnehmeranschluss (TA1,2) weitergeleitet werden. Von einer die Abruf-Informationen (mov1...z) zur Verfügung stellenden Abrufeinrichtung (VOD) werden mehrere weitere Verbindungen (bcc1...k) an die Verteileinrichtung (DSLAM, VERT) herangeführt. Zumindest eine der weiteren Verbindungen (bcc1...k) wird teilnehmeranschlussindividuell ausgewählt. Nach Auswahl der weiteren Verbindung (bcc1...k) wird teilnehmeranschlussindividuell zumindest ein Teil der Abruf-Informationen (movl...k) angefordert, wobei der angeforderte Teil der Abruf-Informationen (movl...z) von der Abrufeinrichtung (VOD) über die ausgewählte Verbindung (bcc1...k) und die Verteileinrichtung (DSLAM, VERT) an den anfordernden Teilnehmeranschluss (TA1,2) weitergeleitet wird. Vorteilhaft können die auf der Teilnehmerseite zur Verfügung stehenden Übertragungsressourcen je nach Bedarf und unabhängig von der Art des aktuell angeforderten Service zugeteilt und anschließend wieder freigegeben werden.

## Beschreibung

Verfahren und Kommunikationsanordnung zur Übertragung von Rundsende-Informationen und/oder abrufbaren Informationen in einem Kommunikationsnetz.

In aktuellen Kommunikationsnetzen sind mehrere dezentrale Kommunikationseinrichtungen bzw. mehrere jeweils über Netzabschlusseinrichtungen an die dezentralen Kommunikationseinrichtungen angeschlossene Kommunikationsendgeräte über ein oder mehrere Teilnehmer-Anschlussnetze bzw. Teilnehmer-Zugangsnetze - auch als ACCESS-Networks bezeichnet - an ein übergeordnetes Kommunikationsnetz angeschlossen.

In den Teilnehmer-Zugangsnetzen als auch in den übergeordneten Kommunikationsnetzen können unterschiedliche Übertragungsverfahren, z.B. ATM, SDH, PDH, Frame Relay, Ethernet oder eine Kombination dieser Übertragungsverfahren zur Übermittlung von Informationen eingesetzt werden.

Teilnehmer-Zugangsnetze sind speziell für den Anschluss bzw. für den Zugang von Teilnehmern auf übergeordnete Kommunikationsnetze ausgestaltet und weisen Schnittstellen zu bereits vorhandene Übertragungsmedien oder spezielle, für den hochbitratigen Datenverkehr vorgesehene Zugangsschnittstellen auf. Für den Anschluss von Teilnehmern im Umfeld von Teilnehmeranschlussnetzen sind verschiedenartige Zugangstechnologien bekannt, wie z.B.
- Anschlüsse über Kupfer-Doppel-Ader,
- Anschlüsse über Kabelfernsehleitungen,
- Anschlüsse über passive optische Netze (PON - Passive Optical Networks)
- Anschlüsse über aktive optische Netze (AON),
- drahtlose Anschlussnetze bzw. Funksysteme.

Die Kupfer-Doppel-Ader ist im Heimbereich in vielen Fällen bereits vorhanden. Mit einer entsprechenden Anschlusstechnik können diese Doppeladern für den Anschluss, hohe Übertragungsraten beanspruchende Teilnehmern - z.B. ATM-Teilnehmern - genutzt werden. Speziell werden in diesem Zusammenhang sowohl unsymmetrische als auch symmetrische (digitale) Übertragungsverfahren - z.B. ADSL, UDSL, VDSL, SDSL - eingesetzt, die eine hohe Bandbreite in Richtung zum Teilnehmer aufweisen. Derartige Übertragungsverfahren werden auch als xDSL-Übertragungsverfahren bezeichnet. Mit derartigen Anschluss-Systemen können Verteildienste - auch als "Breitband―Service" bezeichnet -, insbesondere Multi-Media-Verteildienste - z.B. Radio und Fernsehen - als auch Abrufdienste - auch als "Interaktive Service" bezeichnet - wie beispielsweise "Video on Demand", VoD oder breitbandige Internet-Kommunikation - z.B. Video-Konferenzen - realisiert werden. Der Einsatz von xDSL-Übertragungsverfahren für den Anschluss von Teilnehmern an das Teilnehmerzugangsnetz ist in der Druckschrift "Xpress-Link - Broadband Access with xDSL-Technology", Siemens AG, 2000, Information and Communication Networks, D-81359 München - Seite 8, 9, beispielhaft beschrieben.

In der Druckschrift "XpressLink - Broaden your horizons", Siemens AG, 2000, Information and Communication Networks, Hofmannstraße 51, D-81359 München, Order No. 850001-N8-P60-2-7600, ist der breitbandige Anschluss von Teilnehmern über Teilnehmer-Zugangsnetze beschrieben. Auf Seite 9 und 10 ist die Struktur eines breitbandigen Teilnehmer-Zugangsnetzes beispielhaft dargestellt. Das abgebildete Teilnehmer-Zugangsnetz zeigt mehrere, jeweils Mulitplexer- und/oder Konzentrator-Eigenschaften aufweisende dezentrale Kommunikationseinrichtungen - auch als DSLAM bezeichnet -, an welche ein oder mehrere Teilnehmer über Netzabschlusseinheiten - auch als NT bezeichnet - angeschlossen sind. Durch die dezentralen Kommunikationseinrichtungen wird der jeweils von den Teilnehmern ausgehende Datenverkehr zusammengefasst, bzw. konzentriert und über eine einheitliche Schnittstelle und ggf. über eine zentrale Zugangseinrichtung - hier als ATM-Access - an das übergeordnete Kommunikationsnetz - hier ATM-Backbone - weitergeleitet.

Um die Realisierung eines möglichst breiten Spektrums an Breitband-Services und Interaktiven Servicen über Teilnehmer-Zugangsnetze zu ermöglichen, sind im Rahmen einer als "FSAN, Full Service Access Network" bezeichneten Initiative Bestrebungen im Gange, um einen allgemein gültigen Konsens bezüglich der Definition von Basisanforderungen zu finden, auf deren Basis breitbandige Teilnehmer-Zugangsnetze flächendeckend eingeführt werden sollen. Die Definition der Basisanforderungen ist z.B. in der Druckschrift
"Full Service Access Network Requirements Specification",
J.A. Quayle, Version vom 18.08.1998,
(http://www.laps.bt.com/profsoc/access/) beschrieben.

Eine FSAN-Netzwerkarchitektur insbesondere im Umfeld von VDSL-Übertragungssystemen ist in folgenden Druckschriften beschrieben:
- VDSL System Architecture Specification", FS0052, Revision 0.5(Draft), August 2001
- Architecture Expert Group Contribution, FS0129, Rev. 2, August 2001

Die Realisierung von Verteildiensten über Teilnehmer-Zugangsnetze, beispielsweise die Verteilung von Mulitmedia-Informationen - z.B. Video-Broadcast (Broadcast TV-Services) oder Video on Demand (VoD-Services) - sind dem Fachmann bekannt. Auf Seite 14 der o.g. Druckschrift "Full Service Access Network Requirements Specification" ist beispielhaft eine auf der Teilnehmeranschluss-Seite angeordnete Netzwerkarchitektur dargestellt. Das über das Teilnehmer-Anschlussnetz an den Teilnehmer herangeführte, sowohl breitbandige als auch schmalbandige Informationen aufweisende Datenstrom wird zuerst an einen Splitter weitergeleitet. Durch den Splitter wird eine Aufteilung des eingehenden Datenstromes in einen breitbandigen z.B. breitbandigen Multimedia- bzw. Video-Datenstrom und einem schmalbandigen Datenstrom - z.B. zur Realisierung eins Telefon-Services - erreicht. Der breitbandige Video-Datenstrom wird an eine entsprechende breitbandige Netzabschlusseinrichtung weitergeleitet. An die Breitband-Netzabschlusseinrichtung sind über ein beim Teilnehmer installiertes Heimnetzwerk - Broadband Home Network -mehrere Kommunikationsendeinrichtungen wie z.B. Set-Top-Boxen sowie ein Personalcomputer angeschlossen.

Da durch jede Set-Top-Box sowohl Broadcast-TV-Services als auch Video-on-Demand-Services bereitgestellt werden müssen, ist beispielsweise bei ATM-Kommunikationsnetzen jede Set-Top-Box über zwei permanent eingerichtete, virtuelle Verbindungen - Permanent Virtuell Connections, PVC's - mit der Breitband-Netzabschlusseinrichtung verbunden. Jede dieser Verbindungen muss für die Übertragung der Multimedia-Informationen gemäß aktueller Video-Standards - z.B. MPEG2 - mit einer Übertragungsrate von 4 bis 6 MBit/s konfiguriert sein. Somit ist die Breitband-Netzabschlusseinrichtung über 4 permanent eingerichtete, virtuelle Verbindungen mit der jeweiligen dezentralen Kommunikationseinrichtung verbunden.

In aktuellen ATM-Kommunikationsnetzen sind die einzelnen ATM-Verbindungen in Abhängigkeit von der Art des jeweils zu realisierenden Services unterschiedlich konfiguriert. Zur Realisierung eines interaktiven Services, wie z.B. Video-on-Demand ist beispielsweise ein permanente virtuelle Verbindung VCC (Virtuell Channel Connection) von der teilnehmerseitigen Netzabschlusseinrichtung NT über die dezentrale Kommunikationseinrichtung - im folgenden auch als Verteileinrichtung bezeichnet - und über ggf. einem ATM-Cross-Connect an eine im übergeordneten ATM-Kommunikationsnetz angeordneten VOD-Server geführt. Die Endpunkte dieser virtuellen Verbindung sind in der teilnehmerseitigen Netzabschlusseinrichtung NT und dem Video-Server angeordnet.

Zur Realisierung eins Breitband-Services wie z.B. Broadcast TV-Service (dieser kann zusätzlich zu einem bereits eingerichteten interaktiven Service installiert werden) sind eine oder mehrere permanente virtuelle Verbindungen von der teilnehmerseitigen Breitband-Netzabschlusseinrichtung NT über die Teilnehmeranschlussleitung an die dezentrale Kommunikationseinrichtung, bzw. Verteileinrichtung geführt. Zusätzlich ist die Verteileinrichtung netzseitig über mehrere permanente virtuelle Verbindungen mit einer zentral im Kommunikationsnetz angeordneten Rundsende- bzw. Broadcast-Video-Quelle - auch als digitalen Kopfeinheit bezeichnet - verbunden, wobei über jede der virtuellen Verbindungen Multimedia-Datenströme (z.B. TV-Kanäle) an die Verteileinrichtung herangeführt werden. Mit Hilfe eines zwischen Breitband-Netzabschlusseinrichtung bzw. Set-Top-Box und Verteileinrichtung implementierten Signalisierungsverfahrens - z.B. mittels des standardisierten IGMP-Protokolls ( beschrieben in der Druckschrift IGMP V2, RFC 2236) - kann durch den Teilnehmer teilnehmerindividuell einer der herangeführten Multimedia-Datenströme ausgewählt werden, wobei durch die Verteileinrichtung der ausgewählte Datenstrom über eine der permanenten virtuellen Verbindungen an die Breitband-Netzabschlusseinrichtung bzw. zur jeweiligen Set-Top-Box weitergeleitet wird.

Die beschriebene teilnehmerseitige Netzwerkarchitektur hat den Nachteil, dass zur Bereitstellung von interaktiven Services, wie z.B. Video-on-Demand pro Teilnehmer eine permanente virtuelle Verbindung zwischen der teilnehmerseitigen Breitband-Netzabschlusseinrichtung über die Verteileinrichtung und dem VoD-Server eingerichtet sein muss, d.h. ein bestimmter Umfang an Übertragungsressourcen auf der Teilnehmeranschlussleitung muss für diesen Service reserviert sein. Bei Nichtnutzen des interaktiven-Services werden die auf der Teilnehmeranschlussleitung zwischen Netzabschlusseinrichtung und Verteileinrichtung reservierten Übertragungsressourcen verschwendet.

Der Erfindung liegt die Aufgabe zugrunde, die Ausnutzung der auf der Teilnehmeranschlussleitung zur Verfügung stehenden Übertragungsressourcen bei Bereitstellung von interaktiven Servicen zu optimieren. Die Aufgabe wird ausgehend von einem Verfahren und einer Kommunikationsanordnung gemäß dem Oberbegriff der Patentansprüche 1 und 9 jeweils durch deren kennzeichnende Merkmale gelöst.

Beim erfindungsgemäßen Verfahren zur Übertragung von Rundsende-Informationen und/oder abrufbaren Informationen in einem Kommunikationsnetz werden mehrere Verbindungen zur Übermittlung von Rundsende-Informationen an eine mehrere Teilnehmeranschlüsse aufweisende, dezentrale Verteileinrichtung herangeführt. Mit Hilfe der Verteileinrichtung ist teilnehmeranschlussindividuell zumindest eine der Verbindungen auswählbar, wobei über die ausgewählte Verbindung herangeführte Rundsende-Informationen an den jeweiligen Teilnehmeranschluss weitergeleitet werden. Der wesentliche Aspekt des erfindungsgemäßen Verfahrens besteht darin, dass von einer die Abruf-Informationen zur Verfügung stellenden Abrufeinrichtung mehrere weitere Verbindungen an die Verteileinrichtung herangeführt werden. Zumindest eine der weiteren Verbindungen wird teilnehmeranschlussindividuell ausgewählt. Nach Auswahl der weiteren Verbindung wird teilnehmeranschlußinidividuell zumindest ein Teil der Abruf-Informationen angefordert, wobei der angeforderte Teil der Abruf-Informationen von der Abrufeinrichtung über die ausgewählte Verbindung und die Verteileinrichtung an den anfordernden Teilnehmeranschluss weitergeleitet wird.

Der wesentliche Vorteil des erfindungsgemäßen Verfahrens besteht darin, dass eine permanente Reservierung von Übertragungsressourcen auf der Teilnehmeranschluss-Seite - beispielsweise auf der Teilnehmeranschlussleitung - ausschließlich zur Bereitstellung von interaktiven Servicen für den jeweiligen Teilnehmer nicht mehr erforderlich ist. Vorteilhaft können die auf der Teilnehmeranschlussleitung zur Verfügung stehenden Übertragungsressourcen je nach Bedarf und unabhängig von der Art des aktuell angeforderten Service zugeteilt und anschließend wieder freigegeben werden.

Weitere vorteilhafte Ausgestaltungen sowie einer Kommunikationsanordnung zur Übertragung von Rundsende-Informationen und/oder abrufbaren Informationen sind den weiteren Ansprüchen zu entnehmen.

Im folgenden wird das erfindungsgemäße Verfahren anhand eines Blockschaltbildes näher erläutert.

Das Blockschaltbild zeigt zwei jeweils einem Teilnehmer TLN1,2 zugeordnete Netzabschlusseinrichtungen NT1, NT2, welche über einen Teilnehmerzugangsnetz ACCESS an ein übergeordnetes Kommunikationsnetz KN angeschlossen sind. Das übergeordnete Kommunikationsnetz KN ist beispielsweise nach dem Asynchronen Transfer Modus - ATM - ausgestaltet. Im übergeordneten Kommunikationsnetz KN können weiter Zugangseinheiten - z.B. ein Broadband-Remote-Access-Server BRAS sowie ein Service-Selection-Server SSS, nicht dargestellt - angeordnet sein, durch welche ein Übergang beispielsweise zu einem Internet-Protokoll- bzw. IP-orientierten Kommunikationsnetz zur Bereitstellung von IP-basierten Diensten ermöglicht wird. Des Weiteren ist an das übergeordnete Kommunikationsnetz KN eine digitale Kopfstation DHE angeschlossen, durch welche mehrere unidirektionale Video-Datenströme tv1...n in das übergeordnete Kommunikationsnetz KN eingespeist werden. Des Weiteren ist an das übergeordnete Kommunikationsnetz KN ein Video-Server VOD angeschlossen, durch welchen mehrere abrufbare Informationen mov1...k ― beispielsweise verschiedene abrufbare Spielfilme - zur Realisierung des bidirektionalen Services "Video-on-Demand" gespeichert sind.

An die zwei Netzabschlusseinrichtungen NT1, NT2 sind jeweils über ein teilnehmerseitiges Kommunikationsnetz HOME Kommunikationsendgeräte, wie beispielsweise Set-Top-Boxen oder Personalcomputer angeschlossen - nicht dargestellt. Die Netzabschlusseinrichtungen NT1, 2 sind jeweils über eine Teilnehmeranschlussleitung AL an einen Teilnehmeranschluss TA1,2 einer im Teilnehmer-Zugangsnetz ACCESS angeordneten, dezentralen Kommunikationseinrichtung DSLAM angeschlossen. Die dezentrale Kommunikationseinrichtung DSLAM ist in diesem Ausführungsbeispiel als digitaler Zugangsmultiplexer - Digital Subscriber Line Access Multiplexer - ausgestaltet, durch welche der von bzw. an die Teilnehmer gerichtete Datenverkehr konzentriert bzw. gemultiplext wird. Die einzelnen Teilnehmeranschlüsse TA1, 2 in Verbindung mit den jeweils daran angeschlossenen Anschlussleitungen AL sind gemäß einem für eine hochbitratige Datenübertragung vorgesehenen xDSL-Übertragungsverfahren ausgestaltet. Beispiele für derartige Übertragungsverfahren sind ADSL-, SDSL-, und VDSL-Übertragungsverfahren.

Die dezentrale Kommunikationseinrichtung DSLAM ist über zwei Netzanschlüsse NA1,2 mit dem übergeordneten Kommunikationsnetz KN verbunden. In der dezentralen Kommunikationseinrichtung DSLAM ist eine Verteileinrichtung angeordnet, welche über jeweils einen Anschluss UA, BA mit einem der beiden Netzanschlüsse NA1,2 verbunden ist. Über zwei weitere Anschlüsse VA ist die Verteileinrichtung VERT mit Teilnehmeranschlüssen TA1,2 verbunden.

Zur Realisierung des Breitband-Service bzw. Broadcast-TV-Service sind zwischen dem ersten Netzanschluss NA1 der dezentralen Kommunikationseinrichtung DSLAM und der digitalen Kopfstation DHE n permanente, virtuelle Verbindungen vcc1...n über das Kommunikationsnetz KN eingerichtet. Diese virtuellen Verbindungen vcc1...n können als unidirektionale Verbindungen konfiguriert sein, wobei über jede dieser Verbindungen vcc1...n jeweils ein unidirektionaler Videodatenstrom tv1...n an die dezentrale Kommunikationseinrichtung DSLAM bzw. an die darin angeordnete Verteileinrichtung VERT übermittelt wird - durch Doppelpfeile verdeutlicht. Zusätzlich sind zur Realisierung des interaktiven VoD-Services k weitere permanente virtuelle Verbindungen zwischen dem zweiten Netzabschluss NA2 der dezentralen Kommunikationseinrichtung DSLAM bzw. der Verteileinrichtung VERT und dem VOD-Server eingerichtet - durch Doppelpfeile verdeutlicht - welche als bidirektionale virtuelle Verbindungen konfiguriert sind.

Teilnehmerseitig sind zwischen jeder Netzabschlusseinrichtung NT1,2 und dem jeweiligen über die Teilnehmeranschlussleitung AL1,2 damit verbundenen Teilnehmeranschluss TA1,2 bzw. der Verteileinrichtung VERT jeweils zwei permanente virtuelle Verbindungen tcc1, 2 eingerichtet - durch Doppelpfeile verdeutlicht. Beispielsweise ist auf jeder Teilnehmeranschlussleitung AL1,2 eine der virtuellen Verbindungen tcc1,2 für die Realisierung des Broadcast-TV-Service und die andere virtuelle Verbindung tcc1,2 für die Realisierung des interaktiven VoD-Services vorgesehen.

In den einzelnen Netzabschlusseinrichtungen NT1, 2 und der Verteileinrichtung VERT sind jeweils Mittel zur Realisierung eines geeigneten Auswahlverfahrens IGMP angeordnet - z.B. IGMP-Protokoll - mit Hilfe dessen durch einen Teilnehmer jeweils eine an die Verteileinrichtung VERT herangeführte Verbindung vcc1...n bzw. ein über diese Verbindung vcc1...n übermittelter Videodatenstrom tv1...n ausgewählt wird welcher anschließend über die Verteileinrichtung VERT und über eine freie virtuelle Verbindung tcc1,2 der Teilnehmeranschlussleitung AL an die Netzabschlusseinrichtung NT1, 2 des auswählenden Teilnehmers weitergeleitet wird. Gemäß dem im Blockschaltbild dargestellten Ausführungsbeispiel sind sowohl durch den ersten als auch durch den zweiten Teilnehmer TLN1,2 der über die erste virtuelle Verbindung vcc1 an die Verteileinrichtung VERT übermittelte Video-Datenstrom tv1 ausgewählt, wobei dieser parallel mit Hilfe eines Multicast- bzw. Broadcast-Übertragungsverfahrens über die erste teilnehmerseitige Verbindung tcc1 der ersten Teinehmeranschlußleitung AL1 als auch über die zweite teilnehmerseitige virtuelle Verbindung tcc2 der zweiten Teilnehmeranschlussleitung AL2 an den jeweiligen Teilnehmer TLN1,2 weitergeleitet wird - im Blockschaltbild durch die Verknüpfungen con 1,2 dargestellt.

Erfindungsgemäß kann beispielsweise durch den zweiten Teilnehmer TLN2 im Rahmen des IGMP-Protokolls eine der weiteren an die Verteileinrichtung VERT herangeführten, bidirektionalen, virtuellen Verbindungen auswählt werden - hier bcc1 -, wobei durch die Verteileinrichtung VERT die ausgewählte weitere Verbindung bcc1 mit der aktuell freien teilnehmerseitigen virtuellen Verbindung - hier tcc1 ― auf der zweiten Anschlussleitung AL2 verbunden wird - durch eine Verknüpfung con3 verdeutlicht. Nachdem auf diese Weise zwischen der zweiten Netzabschlusseinrichtung NT2 über die dezentrale Kommunikationseinrichtung DSLAM eine durchgehende virtuelle Verbindung zu dem im Kommunikationsnetz angeordneten Videoserver VOD aufgebaut ist, kann durch den zweiten Teilnehmer durch ein geeignetes Anforderungsverfahren - beispielsweise mit Hilfe eines standardisierten bzw. genormten, in der ersten Netzabschlusseinrichtung NT1 und im Videoserver VOD installierten Auswahlprotokolls AP - die gewünschten Informationen, beispielsweise ein bestimmter Spielfilm mov1, ausgewählt werden. Der ausgewählte Spielfilm mov1 wird dann als Videodatenstrom über die durchgeschaltete virtuelle Verbindung an die zweite Netzabschlusseinrichtung NT2 übermittelt.

Das erfindungsgemäße, teilnehmerseitige Umschalten zwischen unidirektionalen Broadcast-TV-Services und bidirektionalen bzw. interaktiven Services kann beispielsweise durch Verwendung von speziellen, allgemein bekannten IP-Mulitcast-Adressen erfolgen. Wie bereits erläutert wird durch das Umschalten von einem Broadcast-TV-Service auf einen interaktiven Service die dafür auf der jeweiligen Teilnehmeranschlussleitung AL1,2 vorgesehene, virtuelle Verbindung tcc1,2 mit einer aktuell freien, zwischen der dezentralen Kommunikationseinrichtung DSLAM und dem Videoserver VOD eingerichteten bidirektionalen virtuellen Verbindung bcc1...k verbunden.

Durch das erfindungsgemäße Verfahren ist eine dauerhafte Reservierung von auf der Teilnehmeranschlussleitung zur Verfügung stehenden Übertragungsressourcen zur Realisierung von interaktiven Servicen nicht mehr erforderlich, so dass Übertragungsressourcen eingespart werden können.

Eine weitere Einsparung von Übertragungsressourcen kann dahingehend erfolgen, dass unter Berücksichtigung von verkehrstheoretischen Aspekten die Anzahl k der zwischen der dezentralen Kommunikationseinrichtung DSLAM und dem Videoserver VOD eingerichteten permanenten, bidirektionalen, virtuellen Verbindungen bcc1...geringer ist, als die Anzahl der Netzabschlusseinrichtungen NT1,2, welche über die Teilnehmeranschlussleitungen an die dezentrale Kommunikationseinrichtung DSLAM angeschlossen sind. Bei einer derartigen Netzkonfiguration kann jedoch der Fall auftreten, dass die Anzahl der beispielsweise einen Spielfilm anfordernden Teilnehmer größer ist als die Anzahl der zwischen dezentraler Kommunikationseinrichtung DSLAM und VOD-Server eingerichteten virtuellen Verbindungen bcc1...k.

Hierzu ist jedoch erforderlich, dass für den Fall, dass alle zwischen der dezentralen Kommunikationseinrichtung DSLAM und Videoserver VOD eingerichteten, bidirektionalen virtuellen Verbindungen BVC1...k besetzt sind, eine entsprechende Rückmeldung an den anfordernden Teilnehmer erfolgt. Hierzu ist anzumerken, dass im Rahmen des IGMP-Protokoll keine Rückmeldungen an den Teilnehmer möglich sind. Das IGMP müsste somit erweitert werden oder ein anderes entsprechende Rückmeldungen bereitstellendes Auswählverfahren bzw. Auswahl-Protokoll geschaffen werden.

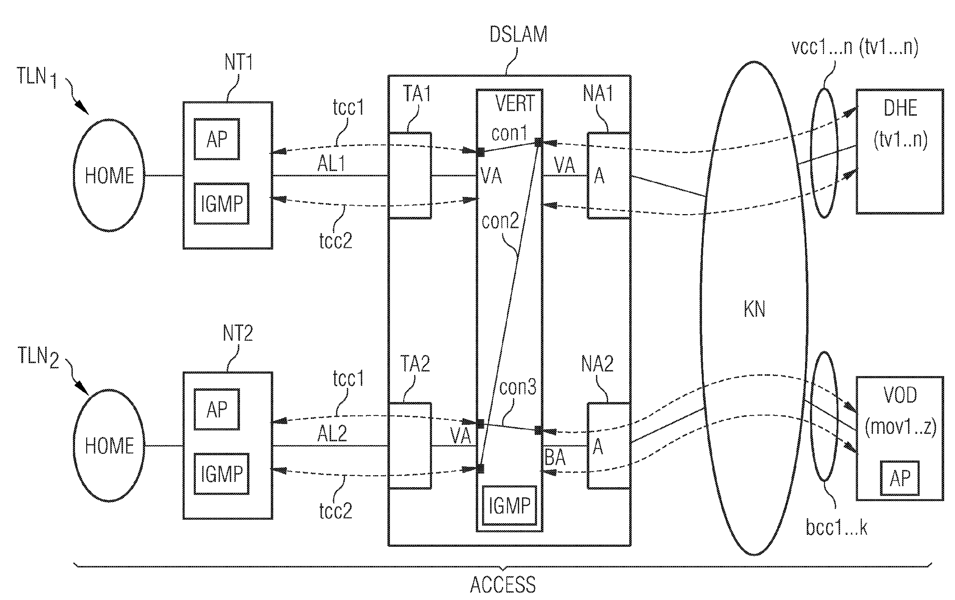

## Patentansprüche

1. Verfahren zur Übertragung von Rundsende-Informationen (tv1...n) und/oder abrufbaren Informationen (mov1...k) in einem Kommunikationsnetz (ACCESS, KN), in dem mehrere Verbindungen (vcc1...n) zur Übermittlung von Rundsende-Informationen (tv1...n) an eine mehrere Teilnehmeranschlüsse (TA1,2) aufweisende, dezentrale Verteileinrichtung (DSLAM, VERT) herangeführt sind,
- bei dem mit Hilfe der Verteileinrichtung (VERT) teilnehmeranschlussindividuell zumindest eine der Verbindungen (vcc1...n) auswählbar ist,
- bei dem die über die ausgewählte Verbindung (vcc1...n) herangeführten Rundsende-Informationen (tv1...n) an den jeweiligen Teilnehmeranschluss (TA1,2) weitergeleitet werden,
**dadurch gekennzeichnet,**
- **dass** von einer die Abruf-Informationen (mov1...z) zur Verfügung stellenden Abrufeinrichtung (VOD) mehrere weitere Verbindungen (bcc1...k) an die Verteileinrichtung (DSLAM, VERT) herangeführt werden,
- **dass** teilnehmeranschlussindividuell zumindest eine der weiteren Verbindungen (bcc1...k) ausgewählt wird,
- **dass** nach Auswahl der weiteren Verbindung (bcc1...k) teilnehmeranschlussindividuell zumindest ein Teil der Abruf-Informationen (mov1...z) angefordert wird,
- **dass** der angeforderte Teil der Abruf-Informationen (mov1...z) von der Abruf-Einrichtung (VOD) über die ausgewählte Verbindung (bcc1...z) und die Verteileinrichtung (VERT) an den anfordernden Teilnehmeranschluss (TA1,2) weitergeleitet wird.

2. Verfahren nach Anspruch 1,
**dadurch gekennzeichnet,**
**dass** die teilnehmeranschlußindividuelle Auswahl der zumindest einen weiteren Verbindung (bcc1...k) mit Hilfe des IGMP-Protokolls erfolgt.

3. Verfahren nach Anspruch 1 oder 2,
**dadurch gekennzeichnet,**
**dass** die teilnehmeranschlußindividuelle Anforderung des zumindest einen Teils der durch die Abrufeinrichtung (VOD) zur Verfügung gestellten Abruf-Informationen (mov1...z) im Rahmen eines zwischen einem dem jeweiligen Teilnehmeranschluss (TA1,2) zugeordneten Teilnehmer (TLN1,2) und der Verteileinrichtung (VERT) realisierten Auswahl-Protokolls (AP) erfolgt.

4. Verfahren nach einem der vorherigen Ansprüche,
**dadurch gekennzeichnet,**
**dass** die an den zumindest einen Teilnehmeranschluss (TA1,2) übermittelten Informationen (tv1...n, mov1...z) mit Hilfe eines xDSL-Übertragungsverfahrens an den dem Teilnehmeranschluss (TA1,2) zugeordneten Teilnehmer (TLN1,2) übermittelt werden.

5. Verfahren nach einem der vorherigen Ansprüche,
**dadurch gekennzeichnet,**
**dass** das Kommunikationsnetz (KN) gemäß einem der synchronen oder plesiochronen, digitalen Hierarchie entsprechenden Kommunikationsnetz oder gemäß als passives optisches Kommunikationsnetz und/oder als paketorientiertes und/oder zellenorientiertes Kommunikationsnetz ausgestaltet ist.

6. Verfahren nach Anspruch 5,
**dadurch gekennzeichnet,**
**dass** das zumindest eine Kommunikationsnetz (KN) gemäß dem Asynchronen Transfer Modus oder gemäß Frame-Relay oder als TCP/IP- oder als Ethernet-konformes Kommunikationsnetz oder als Kombination zumindest eines Teils dieser Kommunikationsnetze ausgestaltet ist.

7. Verfahren nach Anspruch 1,
**dadurch gekennzeichnet,**
**dass** für den Fall, dass keine der weiteren Verbindung (bcc1...k) aktuell auswählbar ist, eine entsprechende Rückmeldung an den Teilnehmer (TLN1,2) erfolgt.

8. Verfahren nach einem der vorherigen Ansprüche,
**dadurch gekennzeichnet,**
**dass** zwischen dem Teilnehmeranschluss (TA1,2) und dem jeweils zugeordneten Teilnehmer (TLN1,2) jeweils mehrere Verbindungen (tcc1,2) zur Übermittlung der an den Teilnehmeranschluss (TA1,2) jeweils weitergeleiteten Rundsende-Informationen (tv1...n) und/oder Abruf-Informationen (mov1...z) eingerichtet sind.

9. Kommunikationsanordnung zur Übertragung von Rundsende-Informationen und/oder abrufbaren Informationen in einem Kommunikationsnetz (ACCESS, KN),
- mit einer mehrere Teilnehmeranschlüsse (TA1,2) aufweisenden, dezentralen Verteileinrichtung (DSLAM, VERT),
- mit einer über mehrere Verbindungen (vcc1...n) zur Übermittlung von Rundsende-Informationen (tv1...n) mit der dezentralen Verteileinrichtung (DSLAM, VER) verbundenen Rundsendeeinrichtung (DHE),
- mit der Verteileinrichtung (VERT) zugeordneten Auswahlmitteln (IGMP) zur teilnehmeranschlußindividuellen Auswahl zumindest einer der Verbindungen (vcc1...n), wobei die Verteileinrichtung (VERT) derart ausgestaltet ist, dass die über die ausgewählte Verbindung (vcc1...n) herangeführten Rundsende-Informationen (tv1...n) an den jeweiligen Teilnehmeranschluss (TA1,2) weitergeleitet werden
**dadurch gekennzeichnet,**
- **dass** eine die Abruf-Informationen (mov1...z) zur Verfügung stellende Abrufeinrichtung (VOD) über mehrere weitere Verbindungen (bcc1...k) an der dezentralen Verteileinrichtung (DSLAM, VERT) angeschlossen ist,
- **dass** die Auswahlmittel (IGMP) derart ausgestaltet sind, dass durch diese teilnehmeranschlussindividuell zumindest eine der weiteren Verbindungen (bcc1...k) auswählbar ist,
- **dass** in der Abrufeinrichtung (VOD) Abrufmittel (AP) zur teilnehmeranschlußindividuellen Anforderung von zumindest einem Teil der Abruf-Informationen (mov1...k) vorgesehen sind,
- **dass** die Abrufeinrichtung (VOD) und die Verteileinrichtung (VERT) derart ausgestaltet sind, dass der angeforderte Teil der Abruf-Informationen (mov1...k) von der Abrufeinrichtung (VOD) über die ausgewählte, weitere Verbindung (bcc1...k) und die Verteileinrichtung (VERT) an den anfordernden Teilnehmeranschluss (TA1,2) übermittelt wird.

10. Kommunikationsanordnung nach Anspruch 9,
**dadurch gekennzeichnet,**
- **dass** an die Teilnehmeranschlüsse (TA1,2) jeweils über eine Teilnehmeranschlussleitung (AL1,2) an eine Netzabschlusseinrichtung (NT1,2) angeschlossen sind,
- **dass** über die Teilnehmeranschlussleitung (AL1,2) jeweils mehrere Verbindungen (tcc1,2) zwischen der Netzabschlusseinrichtung (NT1,2) und der Verteileinrichtung (VERT) zur Übermittlung der Rundsende- und Abruf-Informationen (tv1...n, mov1...z) eingerichtet sind.

11. Kommunikationsanordnung nach Anspruch 9 oder 10,
**dadurch gekennzeichnet,**
**dass** die Teilnehmeranschlüsse (TA1,2), die Teilnehmeranschlussleitungen und die Netzabschlusseinrichtungen (NT1,2) zur Realisierung eines xDSL-Übertragungsverfahrens ausgestaltet sind.

12. Kommunikationsanordnung nach einem der Ansprüche 9 bis 11,
**dadurch gekennzeichnet,**
**dass** das Kommunikationsnetz (KN) gemäß einem der synchronen oder plesiochronen, digitalen Hierarchie entsprechenden Kommunikationsnetz oder als passives optisches Kommunikationsnetz und/oder als paketorientiertes und/oder zellenorientiertes Kommunikationsnetz ausgestaltet ist.

13. Kommunikationsanordnung nach Anspruch 12,
**dadurch gekennzeichnet,**
**dass** das zumindest eine Kommunikationsnetz (KN) gemäß dem Asynchronen Transfer Modus oder gemäß Frame-Relay oder als TCP/IP- oder als Ethernet-konformes Kommunikationsnetz oder als Kombination zumindest eines Teils dieser Kommunikationsnetze ausgestaltet ist.

14. Kommunikationsanordnung nach einem der vorherigen Ansprüche,
**dadurch gekennzeichnet,**
- **dass** die Anzahl k der an die Verteileinrichtung (DSLAM, VERT)herangeführten weiteren Verbindungen (bcc1...k) größer ist als die Zahl der an die Verteileinrichtung (DSLAM, VERT) angeschlossenen Netzabschlusseinrichtungen (NT1,2)
- **dass** die Auswahlmittel (IGMP) derart ausgestaltet sind, dass bei Nichtverfügbarkeit einer weiteren Verbindung (bcc1...k) eine entsprechende Information an die Netzabschlusseinrichtung (NT1,2) übermittelt wird.
